# EUROPEAN PATENT SPECIFICATION

(11) **EP 1 390 278 B1**
(45) Date of publication and mention of the grant of the patent: **14.09.2005**
(21) Application number: 02733219.6
(22) Date of filing: 24.04.2002
(51) Int. Cl.: B65G 1/04, B66F 9/07

(54) **AUTOMATED STORAGE PLANT**
AUTOMATISIERTE LAGERANLAGE
INSTALLATION DE STOCKAGE AUTOMATISE

(30) Priority: 24.04.2001 IT PO20010004
(43) Date of publication of application: 25.02.2004
(73) Proprietor: Immobiliare la Valluccia S.r.l., 59100 Prato (IT)
(72) Inventor: GIRONI, Fabrizio, I-59100 Prato (IT); MAGHERI, Luca, I-59100 Prato (IT)
(86) International application number: PCT/IT2002/000271
(87) International publication number: WO 2002/085761

(56) References cited:
- EP-A- 0 099 340
- DE-A- 4 028 059
- DE-A- 4 032 529
- FR-A- 2 024 298
- GB-A- 1 213 070
- US-A- 3 268 097
- US-A- 3 719 288
- US-A- 4 466 765

## Description

### Technical Field

This invention concerns an automated storage plant and, more specifically, an intensive storage plant equipped with a device for the conveyance and lifting of products (transelevator).

### Background Art

It is known that for automatic storage, particularly intensive storage, of the widest variety of goods, special plants consisting of a variable number of shelves arranged in parallel rows and spaced from one another so as to permit the transit of a transelevator device for the conveyance and deposit/pickup of the goods on/from the shelves are used. In plants currently in use, this transelevator device is generally mobile on a guide fastened to the floor, and extending the length of the aisles formed by the shelves. This obviously necessitates laying the guide, after appropriately leveling the floor of the storage area, and has the further consequence of reducing the flexibility of the plant.

### Disclosure of Invention

The main object of this invention is to provide an intensive storage plant equipped with an automatic transelevator that can be moved among the shelves of the plant without requiring guides on the floor.

A further object of this invention is to provide an automated storage plant that can be constructed economically even using shelving available on the market.

It is also one of the objects of the invention to provide a plant that is especially, but not exclusively, suitable for the automated storage of paper documents.

These objects are achieved with a device that conforms to the enclosed claims.

The technical features and the advantages of this invention will appear clear from the following detailed description of one non-limiting example of its implementation and of a variation in its realization.

### Brief Description of Drawings

In the drawings:
- Fig. 1 illustrates a partial schematic perspective of a plant in accordance with the invention, with the transelevator in a first operating configuration;
- Fig. 2 illustrates the same perspective shown in Fig. 1, with the transelevator in a second operating configuration;
- Fig. 3 illustrates the same perspective shown in Fig. 1, with the transelevator in a third operating configuration;
- Fig. 4 illustrates in detail the upper part of the transelevator located between two shelves;
- Fig. 5 illustrates a schematic elevation of the transelevator located between two shelves;
- Fig. 6 illustrates in greater detail the upper part of the transelevator and shelves shown in Fig. 5;
- Fig. 7 illustrates a partial schematic perspective of a variation in the realization of the plant shown in Fig. 1.

### Best Mode for Carrying Out the Invention

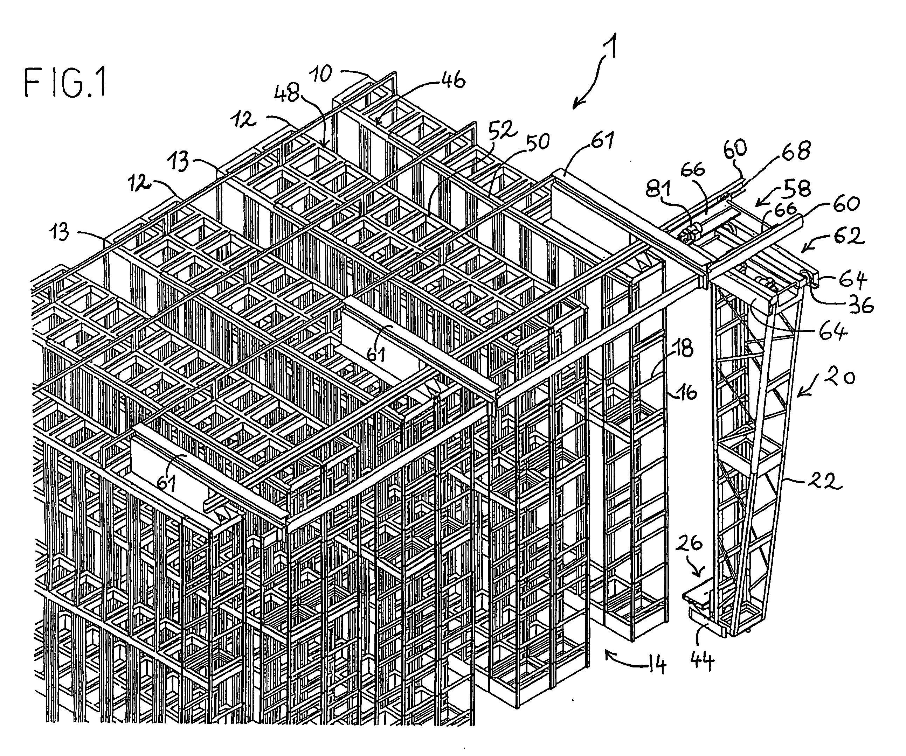

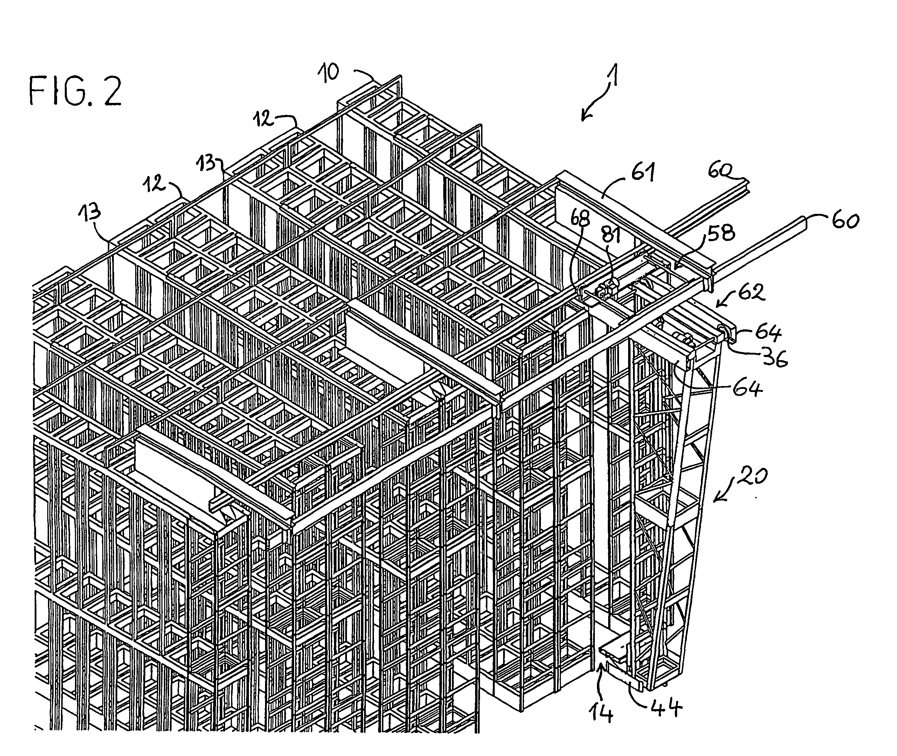

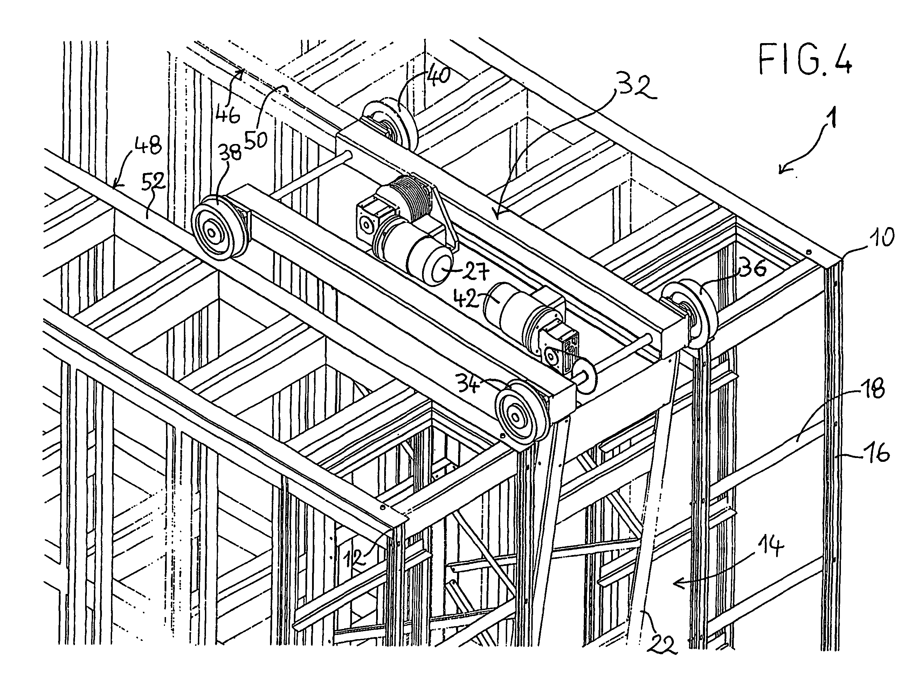

With reference to Figures 1 to 6 enclosed, an automatic storage plant 1 according to the invention includes a plurality of metal shelves 10,12,13 arranged facing each other in pairs, in parallel rows spaced so as to form, between each pair of facing shelves 10,12 an aisle 14. The shelves are composed of uprights 16 and crossbars 18 for the storage of goods, in the manner known.

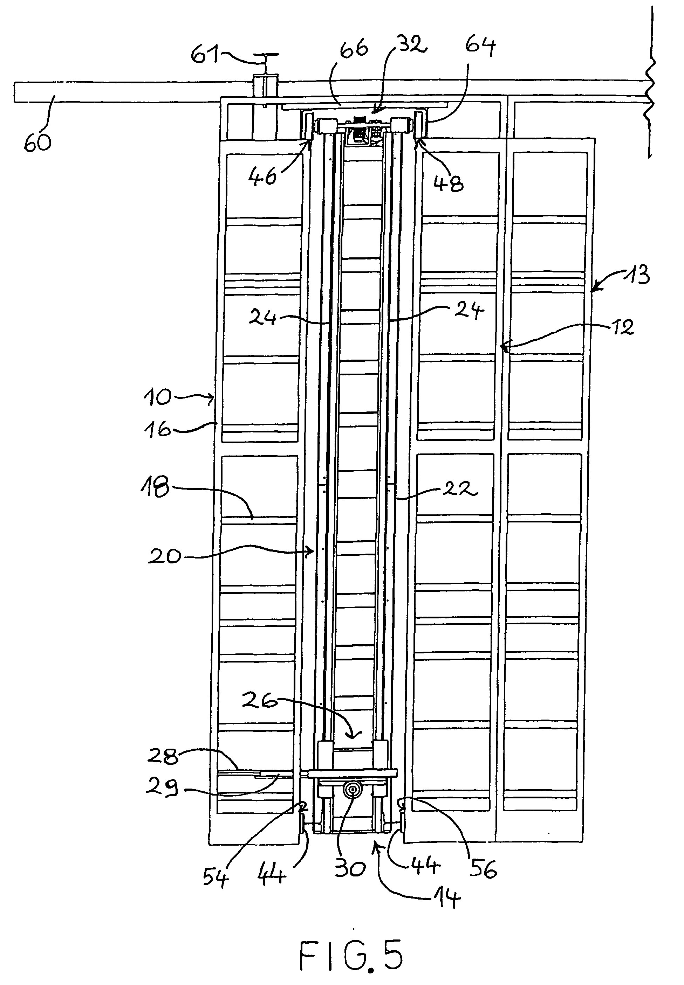

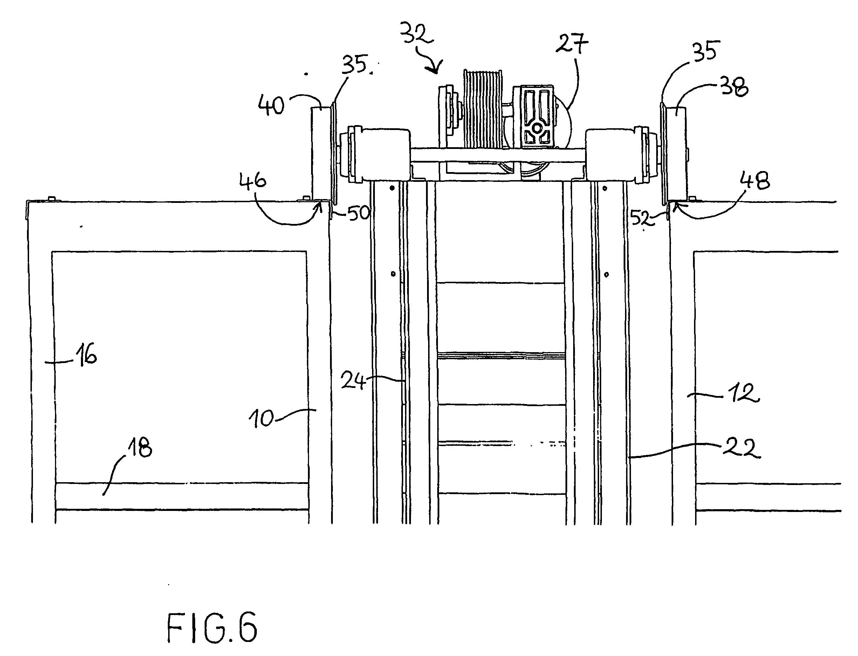

A component of the plant 1 is also a transelevator device, indicated as a whole with 20, which consists mainly of a vertically extended structure 22. The structure 22 is provided with guides 24 (see Figures 5,6) for the vertical glide of a device 26 designed to pick up/deposit the goods from/on the shelves.

This device 26 is driven along the vertical guide 24 by means of an electric motor 27 located in the upper section of the structure 22. The device 26 preferably consists of a shelf 28 that is horizontally mobile on telescopic guides 29 by means of a small electric motor 30. The device for pickup/deposit 26 can also be composed of known gripping means such as, for example, those used to move pallets.

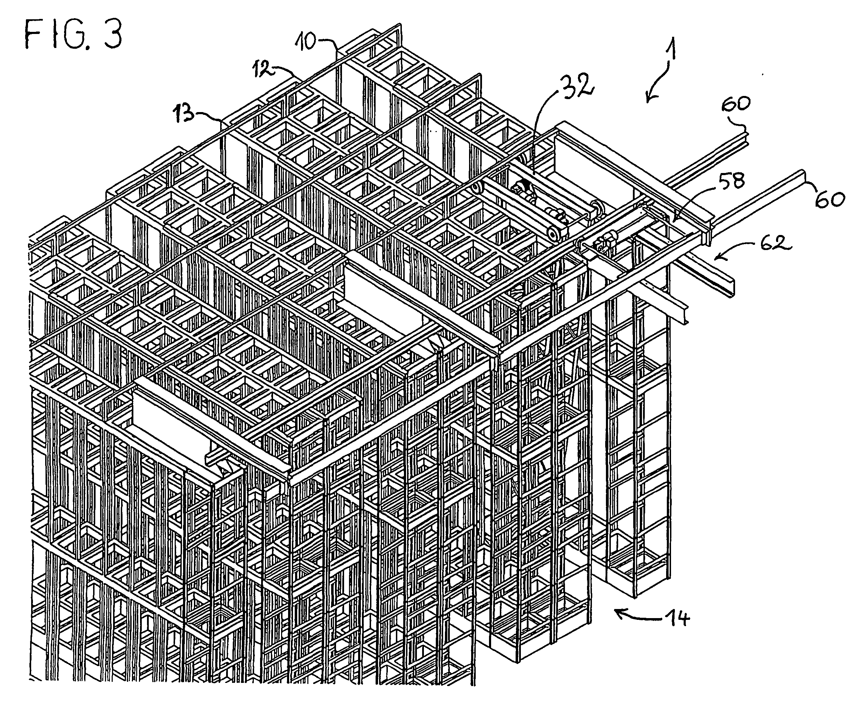

As shown in detail in Figures 3-6, the upper part of the transelevator 20 is shaped like a carriage 32. More in particular, the structure 22 is endowed at the top with two pairs of motor-driven wheels 34,36,38,40 projecting laterally. Another electric motor 42, also located at the top of the structure 22, drives these wheels.

In conformity with the invention, the carriage 32 moves along between the facing shelves 10,12, with the wheels 34,36,38,40 that run along the upper edges 46,48 of them, without the transelevator 20 resting on the floor.

Advantageously, to facilitate the movement of the wheels 34,36,38,40, an L-shaped section bar 50,52 is applied to each edge 46,48. In addition, each wheel is provided with a fitting rim 35 (see Fig. 6).

At the bottom (see Figures 1,2,5) the structure 22 is preferably provided with a pair of runners 44 or wheels (not shown) that glide along the sides of the shelves 10,12.

The movement of the carriage 32 causes movement of the underlying structure 22, and thus of the entire transelevator 20, to the desired position along the aisle 14. The runners (or wheels) on the sides of the bottom 44, running along the bottom sides 54,56 of the shelves (see Fig. 5), prevent the structure from swaying from side to side. It is obvious that, since the structure 22 of the transelevator 20 is completely supported by the shelves 10,12 and does not stand on the floor of the storage facility, no operations of leveling are necessary except as needed for the shelves alone.

Advantageously, to move the transelevator 20 from one aisle to another, a crossing device 58 is provided. It moves along a double aerial guide 60 placed at one end of the rows of shelves 10,12,13. The double guide 60 can be sustained by the shelves 10,12,13 by means of beams 61 - as shown-or by uprights.

This crossing device consists basically of an auxiliary carriage 58 comprising a box element 62, open at the bottom and on at least one side, which can house the carriage 32 of the transelevator 20. More specifically, this box element 62 includes a pair of C-shaped section bars 64, arranged parallel and with their open sides facing, in which the wheels 34,36,38,40 of the carriage 32 can fit. The section bars 64 are coupled at the top with a pair of crossing elements 66 bearing one pair of wheels 68 each, sliding along the double guide 60. The movement of the auxiliary carriage 58 along the guide 60 is preferably achieved by means of an electric motor 81 located on the box element 62, or by means of belts, chains, racks or the like. Figures 1 to 3 show the stages of progressive approach to the selected aisle 14 of the auxiliary carriage 58 with the transelevator 20, and the entrance in the aisle 14 of the transelevator 20 alone.

A plant conforming with the invention offers, among other things, the advantage that the distance between the shelves need only be the minimum necessary for the passage of the transelevator. Also, thanks to the auxiliary carriage, it is possible to move the transelevator rapidly from one aisle to another. Furthermore, the plant is particularly suited to the storage of cartons containing paper documents.

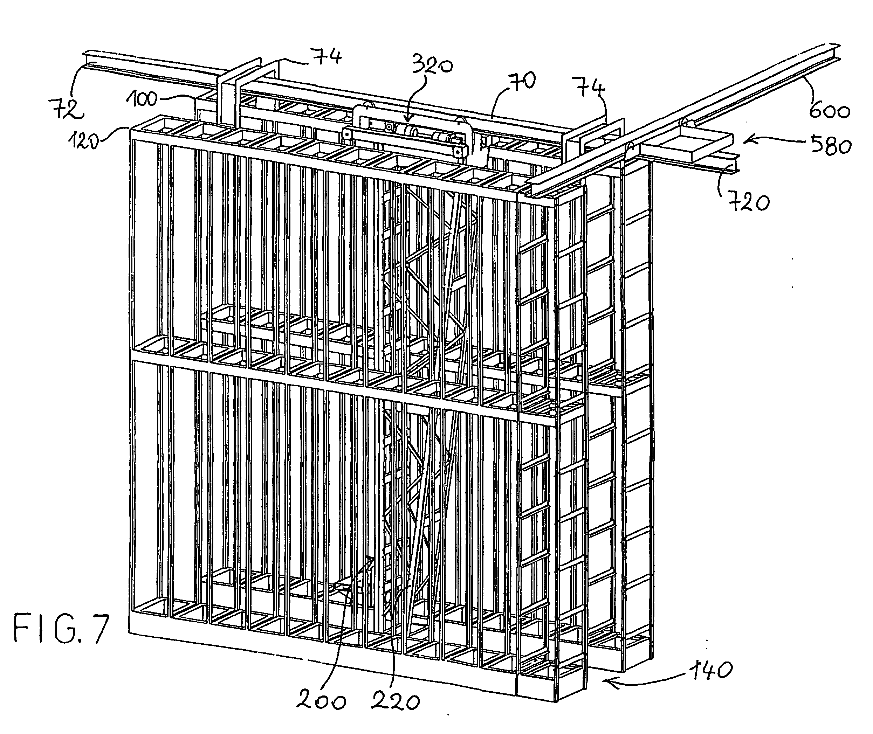

A second embodiment of an automated storage plant according to the invention is illustrated in Fig. 7. In this case the carriage 320, placed at the top of the structure 220 of the transelevator 200, runs along an aerial guide 70 - consisting in the example illustrated of a beam 72 supported at the center of the aisle 140 by bridges 74 connecting the shelves 100,120 - without the transelevator 200 resting on the floor of the storage facility. For the movement of the transelevator 200 from one aisle to another, the same as for the previous example, there is an auxiliary carriage 580 that glides along an aerial guide 600 and is provided with a guide (part of beam 720 in the example) that serves as an extension of the aerial guide 70 (i.e. of beam 72).

## Claims

1. Automated storage plant for goods, comprising a plurality of shelves (10,12,13) arranged in facing parallel pairs spaced so as to form, between each pair of facing shelves (10,12), an aisle (14) for the transit of a transelevator device (20) provided with means (26) for picking up/depositing the goods from/on the shelves, said transelevator (20) being supported by said facing shelves (10,12) without resting on the floor of the storage facility, **characterized in that** an aerial guide (60) is located at one end of the shelves (10,12,13), crossing means (58), which move along said aerial guide (60) and are designed to house said transelevator (20), being provided to enable the transelevator to pass from one aisle to another without resting on the floor of the storage facility.

2. Plant according to claim 1, **characterized in that** said transelevator device includes a vertically extended structure (22) equipped with guides (24) for the vertical glide of said means (26) for picking up/depositing the goods from/on the shelves, a carriage (32) that runs along the upper edges (46,48) of said facing shelves (10,12) being located at the top of said structure (22).

3. Plant according to claim 2, **characterized in that** said crossing means include an auxiliary carriage (58) comprising a box element (62), open at the bottom and on at least one side, which can house said carriage (32) of the transelevator (20).

4. Plant according to claim 3, **characterized in that** said this box element (62) includes a pair of C-shaped section bars (64), arranged parallel and with their open sides facing, in which the wheels (34,36,38,40) of said carriage (32) of the transelevator (20) can fit, said section bars (64) being coupled with a pair of crossing elements (66) bearing one pair of wheels (68) each, sliding along a double aerial guide (60).

5. Plant according to claim 2, **characterized in that** an L-shaped section bar (50,52) is applied to each edge (46,48) of said facing shelves (10,12) for said carriage (32) to glide along.

6. Plant according to any of the preceding claims, **characterized in that** said structure (22) is provided at the bottom with a pair of lateral runners (44) or wheels that glide along the bottom edges (54,56) of the shelves (10,12) thus preventing the structure (22) from swaying from side to side.

7. Plant according to any of the preceding claims, **characterized in that** the movement of said means (26) for picking up/deposit the goods and of said carriage (32) is obtained by means of electric motors (27,41) located at the top of said structure (22) and that said crossing means (58) include an electric motor (81) for the movement along said aerial guide (60).

8. Plant according to any of the preceding claims, **characterized in that** said means for picking up/depositing (26) the goods include a shelf (28), that is horizontally mobile on telescopic guides (29), and a small electric motor (30) to drive said shelf (28).

## Patentansprüche

1. Automatische Lagerungsanlage für Waren, umfassend eine Mehrzahl von Regalen (10,12,13), die in zugewandten parallelen Paaren beabstandet angeordnet sind, so dass zwischen jedem Paar zugewandter Regale (10,12) ein Gang (14) für den Durchgang einer Transelevatorvorrichtung (20) vorhanden ist, die mit Mitteln (26) zum Aufnehmen/Absetzen der Waren von/auf den Regalen ausgestattet ist, wobei der Transelevator (20) von den besagten zugewandten Regalen (10,12) getragen wird, ohne den Boden der Lagerhalle zu berühren, **dadurch gekennzeichnet, dass** eine in der Luft angeordnete Führung (60) an einem Ende der Regale (10,12,13) angeordnet ist und dass Umsetzungsmittel (58), die sich entlang der besagten in der Luft angeordneten Führung (60) bewegen und so ausgebildet sind, dass sie den Transelevator (20) aufnehmen können, vorgesehen sind, welche es dem Transelevator ermöglichen, von einem Gang in einen anderen zu gelangen, ohne auf dem Boden der Lageranlage zu ruhen.

2. Anlage nach Anspruch 1, **dadurch gekennzeichnet, dass** die besagte Transelevatorvorrichtung eine vertikal erstreckte Struktur (22) umfasst, die mit Führungen (24) zur vertikalen Bewegung des besagten Mittels (26) zum Aufnehmen/Absetzen der Waren von/auf den Regalen ausgestattet ist, wobei ein Wagen (32), der sich entlang den oberen Kanten (46, 48) der zugewandten Regale (10, 12) bewegt, oben an der Struktur (22) angeordnet ist.

3. Anlage nach Anspruch 2, **dadurch gekennzeichnet, dass** das Umsetzungsmittel einen Hilfswagen (58) umfasst, der ein Boxenelement (62) aufweist, welches am Boden und an wenigstens einer Seite offen ist, welches Boxenelement den Wagen (32) des Transelevators (20) aufnehmen kann.

4. Anlage nach Anspruch 3, **dadurch gekennzeichnet, dass** dieses Boxenelement (62) ein Paar C-fbrmiger Abschnittsstangen (64) aufweist, die parallel und mit ihren offenen Seiten zugewandt angeordnet sind, in welche die Räder (34,36,38,40) des Wagens (32) des Transelevators (20) passen, wobei die Abschnittsstangen (64) mit einem Paar Querelementen (66) gekoppelt sind, die jeweils ein Paar Räder (68) stützen, die entlang einer doppelten in der Luftangeordneten Führung (60) gleiten.

5. Anlage nach Anspruch 2, **dadurch gekennzeichnet, dass** eine L-förmige Abschnittsstange (50,52) an jeder Kante (46,48) der zugewandten Regale (10,12) angeordnet ist, auf der der besagte Wagen (32) entlang gleiten kann.

6. Anlage nach einem der vorstehenden Ansprüche, **dadurch gekennzeichnet, dass** die besagte Struktur (22) am Boden mit einem Paar seitlicher Läufer (44) oder Räder ausgestattet ist, die an den Bodenkanten (54,56) der Regale (10,12) entlang gleiten, wodurch verhindert wird, dass die Struktur (22) hin und her schwankt.

7. Anlage nach einem der vorstehenden Ansprüche, **dadurch gekennzeichnet, dass** die Bewegung des Mittels (26) zum Aufnehmen/Absetzen der Waren und des besagten Wagens (32) durch Elektromotoren (27,41) erzielt wird, die sich oben an der besagten Struktur (22) befinden, und dass die besagten Umsetzungsmittel (58) einen Elektromotor (81) einschließen, für die Bewegung entlang der besagten Führung (60).

8. Anlage nach einem der vorstehenden Ansprüchen, **dadurch gekennzeichnet, dass** das besagte Mittel (26) zum Aufnehmen/Absetzen der Waren ein Regal (28) einschließt, das auf Teleskopführungen (29) horizontal beweglich ist, und einen kleinen Elektromotor (30) zum Antrieb des Regals (28).

## Revendications

1. Installation automatique de stockage de marchandises, comprenant plusieurs rayonnages (10,12,13) disposés par paires parallèles face à face et espacées de façon à former, entre chaque paire de rayonnages face à face (10,12), un couloir (14) pour le passage d'un dispositif transélévateur (20) équipé de moyens (26) de préhension/dépôt des marchandises de/sur les rayonnages, ce transélévateur (20) étant soutenu par lesdits rayonnages face à face (10,12) sans reposer sur le sol du magasin de stockage, **caractérisée en ce qu'**un rail aérien (60) est placé à une extrémité des rayonnages (10,12,13), des moyens de translation (58) qui se déplacent le long de ce rail aérien (60) et sont conçus pour loger le transélévateur (20), étant prévus pour permettre à celui-ci de passer d'un couloir à l'autre sans reposer sur le sol du magasin de stockage.

2. Installation suivant la revendication 1, **caractérisée en ce que** le dispositif transélévateur comprend une structure (22) se développant verticalement et équipée de rails (24) pour le coulissement vertical de ces moyens (26) de préhension/dépôt de marchandises de/sur les rayonnages, un chariot (32) qui se déplaçe le long des bords supérieurs (46,48) des rayonnages face à face (14,12) étant situé au sommet de la structure (22).

3. Installation suivant la revendication 2, **caractérisée en ce que** les moyens de translation comprennent un chariot auxiliaire (58) avec un élément caisson (62), ouvert dans le bas et au moins sur un côté, pouvant loger ledit chariot (32) du transélévateur (20).

4. Installation suivant la revendication 3, **caractérisée en ce que** cet élément caisson (62) comprend deux profilés en forme de C (64), disposés parallèlement et avec leurs côtés ouverts face à face, dans lesquels les roues (34,36,38,40) dudit chariot (32) du transélévateur (20) peuvent être logées, lesdits profilés (64) étant raccordés avec une paire d'éléments transversaux (66) portant chacun une paire de roues (68) coulissant le long d'un double rail aérien (60).

5. Installation suivant la revendication 2, **caractérisée en ce qu'**un profilé en forme de L (50,52) est appliqué sur chaque bord (46,48) desdits rayonnages face à face (10,12) pour le coulissement dudit chariot (32).

6. Installation suivant l'une quelconque des revendications précédentes, **caractérisée en ce que** ladite structure (22) est équipée inférieurement de deux patins latéraux (44) ou roues coulissant le long des bords inférieurs (54,56) des rayonnages (10,12) de façon à interdire tout oscillation latérale de la structure (22).

7. Installation suivant l'une quelconque des revendications précédentes, **caractérisée en ce que** le mouvement des moyens (26) de préhension/dépôt de marchandises et du chariot (32) est obtenu au moyen de moteurs électriques (27,41) placés au sommet de la structure (22) et que lesdits moyens de translation (58) comprennent un moteur électrique (81) pour le mouvement le long du rail aérien (60).

8. Installation suivant l'une quelconque des revendications précédentes, **caractérisée en ce que** lesdits moyens de préhension/dépôt (26) des marchandises comprennent un rayonnage (28), se déplaçant horizontalement sur des coulisses télescopiques (29), et un petit moteur électrique (30) pour le déplacement dudit rayonnage (28).
